# FASCICULE DE BREVET EUROPEEN

(11) **EP 0 485 642 B1**
(45) Date de publication et mention de la délivrance du brevet: **19.07.1995**
(21) Numéro de dépôt: 90121563.2
(22) Date de dépôt: 10.11.1990
(51) Int. Cl.: A47J 29/00, A47J 27/18, A47J 27/16, A23L 1/32

(54) **Procédé et dispositif pour la cuisson d'une masse d'oeufs brouillés**
Verfahren und Vorrichtung zum Kochen von Rührei
Method and device for cooking scrambled eggs

(43) Date de publication de la demande: 20.05.1992
(73) Titulaire: FRISCO-FINDUS AG, CH-9400 Rorschach (CH)
(72) Inventeur: Harlaux, Ginette, F-60000 Beauvais (FR); Poillot, Gilles, F-95290 L'Isle Adam (FR)
(74) Mandataire: Vuille, Roman

(56) Documents cités:
- EP-A- 259 527
- EP-A- 0 191 267
- FR-A- 2 403 770
- US-A- 3 624 230
- US-A- 3 958 035
- PATENT ABSTRACTS OF JAPAN vol. 10, no. 103 (C-340)(2160) 18 Avril 1986 & JP-A-60 232 077 (TAIYOUKAGAKU K.K.) 18 Novembre 1985

## Description

La présente invention est relative à un procédé et un dispositif pour la cuisson d'une masse d'oeufs brouillés.

Il est souvent utile, dans l'industrie agro-alimentaire, de disposer d'oeufs brouillés cuits pouvant être incorporés à d'autres ingrédients pour réaliser un plat déterminé par exemple destiné à être surgelé.

Or, jusqu'à présent, à la connaissance du déposant, il n'existait pas de moyen permettant de cuire une masse d'oeufs brouillés de plusieurs dizaines de kilogrammes.

En effet, le principal problème rencontré, qui jusque là n'avait pas de solution satisfaisante, est de pouvoir cuire de façon homogène une masse d'oeufs brouillés. Plus particulièrement, il convient de pouvoir assurer un taux de coagulation homogène et contrôlé dans toute la masse.

FR-A-2403770 décrit un procédé et un appareil pour cuire des plats individuels d'oeufs brouillés (1 à 8 oeufs). Le procédé est caractérisé en ce que l'on casse un nombre déterminé d'oeufs crus dans un récipient et on introduit à l'intérieur de la masse d'oeufs des jets de vapeur en des emplacements fixes et espacés, la vapeur étant dispersée dans cette masse de manière à agiter et chaufffer cette masse.

La présente invention a ainsi pour but de proposer un procédé et un dispositif permettant de cuire industriellement une masse d'oeufs brouillés de plusieurs dizaines de kilogrammes.

La présente invention a ainsi pour objet un procédé de cuisson d'une masse d'oeufs brouillés, dans lequel on incorpore de l'eau et de l'amidon à la masse d'oeufs, on homogénéise le produit obtenu, on place le produit obtenu dans une enceinte, et on cuit le produit obtenu, caractérisé en ce que l'on cuit le produit obtenu par injection de vapeur sous pression dans la masse d'oeufs de manière à générer un vortex dans la masse d'oeufs brouillés, et on chauffe l'enceinte par sa paroi.

La présente invention a aussi pour objet un dispositif pour la mise en oeuvre du procédé ci-dessus dans lequel un dispositif d'injection de vapeur sous pression est placé dans une enceinte, à une partie inférieure de celle-ci, et cette enceinte étant fermée à sa partie supérieure par un couvercle caractérise en ce que l'enceinte présente une cuve à double enveloppe à l'intérieur de laquelle circule un fluide de chauffage, le dispositif d'injection de vapeur présentant un serpentin creux, percé de trous qui sont disposés de manière à générer un vortex dans la masse d'oeufs brouillés.

Grâce à la combinaison d'une cuisson de la masse par l'extérieur, par la double enveloppe, et par l'intérieur, par l'injection de vapeur, il est possible de coaguler de façon homogène la masse d'oeufs brouillés en évitant ainsi l'apparition de secteurs trop cuits et de secteurs peu ou pas cuits du tout.

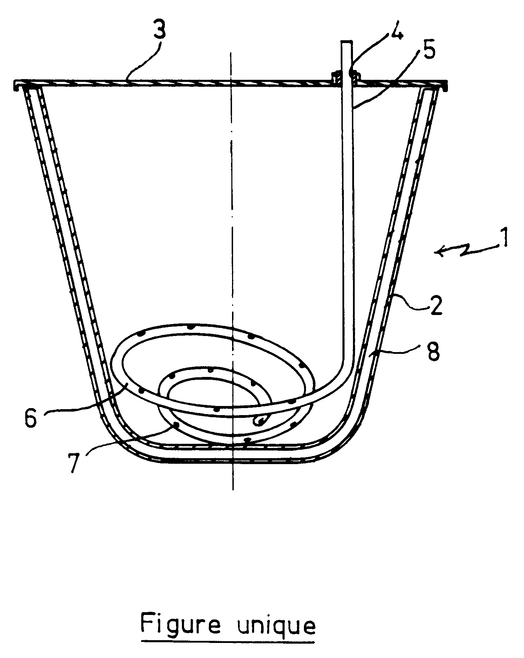

D'autres caractéristiques et avantages de l'invention ressortiront à la suite de la description qui va suivre faite en référence à la figure unique donnée seulement à titre d'exemple non limitatif et qui représente une vue schématique en coupe verticale partielle d'un dispositif selon l'invention.

Comme on le voit représenté à la figure unique, le dispositif selon l'invention est constitué d'une enceinte 1 constituée d'une cuve 2 fermée à sa partie supérieure par un couvercle amovible étanche 3.

Ce couvercle étanche 3 est percé d'un orifice 4 à travers lequel passe un conduit 5, relié à une source de vapeur sous pression non représentée, servant à injecter la vapeur sous pression.

Le conduit 5 se prolonge vers le bas, dans l'enceinte 1, par un serpentin 6 creux, percé de trous 7 d'un diamètre suffisant pour laisser passer la vapeur mais n'autorisant pas le mélange d'oeufs brouillés additionné d'éventuels additifs à pénétrer à l'intérieur du dit serpentin 6, compte tenu de la viscosité du mélange. Préférablement, ces trous 7 sont orientés de telle façon que l'injection de vapeur sous pression génère un vortex dans la masse d'oeufs brouillés.

Ce serpentin 6 est situé à la partie inférieure de la cuve 2 mais il peut se prolonger vers le haut, en fonction du volume d'oeufs brouillés à traiter.

La cuve 2 est constituée d'une double enveloppe ménageant un espace 8 à l'intérieur duquel peut circuler un fluide de chauffage, par exemple de la vapeur d'eau.

Dans le procédé selon l'invention, des oeufs entiers, éventuellement salés et additionnés de jaunes d'oeufs, d'eau et d'amidon, sont battus avec un mélangeur de type connu pour donner un mélange homogène.

L'eau et l'amidon servent à éviter la texture d'oeuf dur qui résulte d'une cuisson à haute température et permettent ainsi d'obtenir une veritable texture d'oeufs brouillés.

Ce mélange homogène est ensuite placé dans l'enceinte 1 qui est refermée par son couvercle 3. Préférablement, le niveau de remplissage de l'enceinte 1 est tel que la partie supérieure du serpentin 6 affleure à la surface. La cuisson proprement dite peut alors commencer par injection de vapeur d'eau sous pression par le serpentin 6 et par circulation de vapeur d'eau dans la double enveloppe constituant la cuve 2.

Préférentiellement, dans une première étape, la cuisson peut être réalisée uniquement par injection de vapeur d'eau par le serpentin 6 et, dans une deuxième étape par l'effet simultané de l'injection de vapeur d'eau et de la circulation de vapeur d'eau dans la double enveloppe de la cuve 2.

A la fin de la cuisson, quand le degré de coagulation désiré a été atteint, le mélange est à une température comprise entre 80°C et 90°C.

Il convient alors de refroidir rapidement le produit obtenu, pour éviter une poursuite de la coagulation.

Ceci peut être réalisé en transférant le produit obtenu par tranches de quelques centimètres d'épaisseur dans des paniers à trous qui sont plongés dans une cuve contenant un mélange d'eau et de glace pendant quelques minutes. Une fois refroidi le produit est égoutté et peut être, par exemple, découpé en morceaux de taille déterminée qui seront incorporés dans une recette.

L'exemple suivant illustre la mise en oeuvre du procédé selon l'invention.

### Exemple :

Un mélange constitué de
60,748 kg d'oeufs entier salés
9,345 kg de jaunes d'oeufs salés
15,888 kg d'eau froide
3,738 kg d'amidon
soit au total 89,719 kg a été homogénéisé et introduit dans une enceinte 1 fermée par son couvercle 3.

De la vapeur d'eau sous une pression de 3 bars, à un débit de 30 kg/h, a été introduite dans le mélange pendant 8 minutes.

Puis alors que l'injection de vapeur continuait, le chauffage par la double enveloppe de la cuve 2 a été réalisé pendant 7 minutes.

Le temps total de la cuisson a donc été de 15 minutes.

Le mélange cuit a ensuite été immédiatement transféré vers le circuit de refroidissement.

Des tranches d'oeufs cuits de 50 mm d'épaisseur ont été placées dans des paniers percés de trous eux-mêmes disposés dans une cuve contenant un mélange d'eau et de glace en paillettes.

Le refroidissement a duré 10 minutes, la température finale du produit étant de 6°C. Le produit a ensuite été égoutté pendant encore 10 minutes puis dirigé vers un dispositif de coupe où il a été découpé pour pouvoir être ensuite réincorporé dans une recette.

## Revendications

1. Procédé de cuisson d'une masse d'oeufs brouillés, dans lequel on incorpore de l'eau et de l'amidon à la masse d'oeufs, on homogénéise le produit obtenu, on place le produit obtenu dans une enceinte, et on cuit le produit obtenu, caractérisé en ce que l'on cuit le produit obtenu par injection de vapeur sous pression dans la masse d'oeufs de manière à générer un vortex dans la masse d'oeufs brouillés, et on chauffe l'enceinte par sa paroi.

2. Procédé selon la revendication 1 dans lequel la masse d'oeufs brouillés est d'abord cuite, dans une première étape, par injection de vapeur puis, dans une deuxième étape par l'effet simultané de l'injection de vapeur et du chauffage de la paroi de l'enceinte.

3. Procédé selon l'une des revendications précédentes dans lequel une fois la cuisson terminée le produit est refroidi rapidement.

4. Procédé selon l'une des revendications précédentes dans lequel la vapeur est injectée dans la masse d'oeufs à l'aide d'un serpentin creux, percé de trous, situé dans la masse d'oeufs.

5. Dispositif pour la mise en oeuvre du procédé selon l'une des revendications précédentes dans lequel un dispositif d'injection de vapeur (5-6) sous pression est placé dans une enceinte (1), à une partie inférieure de celle-ci, et cette enceinte (1) étant fermée à sa partie supérieure par un couvercle (3) caractérisé en ce que l'enceinte (1) présente une cuve à double enveloppe à l'intérieur de laquelle circule un fluide de chauffage, le dispositif d'injection de vapeur (5-6) présentant un serpentin creux (6), percé de trous (7) qui sont disposés de manière à générer un vortex dans la masse d'oeufs brouillés.

## Claims

1. A process for cooking a mass of scrambled eggs in which, after incorporation of water and starch in the mass of eggs, the product obtained is homogenized and then placed in an enclosure where it is cooked, characterized in that the product obtained is cooked by injection of steam under pressure into the mass of scrambled eggs to create a vortex therein and the enclosure is heated through its wall.

2. A process as claimed in claim 1, in which the mass of scrambled eggs is cooked first by injection of steam in a first step and then, in a second step, by the simultaneous effect of the injection of steam and heating of the wall enclosure.

3. A process as claimed in any of the preceding claims; in which the product is rapidly cooled after cooking.

4. A process as claimed in any of the preceding claims, in which the steam is injected into the mass of eggs through a hollow coil drilled with holes and arranged in the mass of eggs

5. An apparatus for carrying out the process claimed in any of the preceding claims, in which an injection system (5-6) for injecting steam under pressure is arranged in an enclosure (1) in a lower part thereof, the enclosure (1) being closed in its upper part by a cover (3), characterized in that the enclosure (1) comprises a doublejacketed tank inside which a heating fluid circulates, the steam injection system (5-6) comprising a hollow coil (6) drilled with holes (7) which are positioned in such a way as to create a vortex in the mass of scrambled eggs.

## Patentansprüche

1. Verfahren zum Garen einer Rühreimasse, bei dem der Eimasse Wasser und Stärke hinzugefügt werden, das erzielte Produkt homogenisiert wird, das erzielte Produkt in einen Behälter gefüllt wird und das erzielte Produkt gegart wird,
dadurch gekennzeichnet,
daß das erzielte Produkt durch Einblasen von unter Druck stehendem Dampf in die Eimasse dergestalt gegart wird, daß ein Hohlwirbel in der Rühreimasse erzeugt wird, und der Behälter an seiner Wandung erhitzt wird.

2. Verfahren nach Anspruch 1, bei dem die Rühreimasse zunächst in einem ersten Schritt durch Einblasen von Dampf und dann in einem zweiten Schritt durch die gleichzeitige Wirkung des Einblasens von Dampf und des Heizens der Wandung des Behälters gegart wird.

3. Verfahren nach einem der vorherigen Ansprüche, wobei das Produkt, sobald das Garen beendet ist, rasch abgekühlt wird.

4. Verfahren nach einem der vorherigen Ansprüche, wobei der Dampf mittels einer Rohrschlange mit Durchbohrungen, die sich in der Eimasse befindet, in die Eimasse eingeblasen wird.

5. Vorrichtung zur Durchführung des Verfahrens nach einem der vorherigen Ansprüche, bei der eine Vorrichtung zum Einblasen von unter Druck stehendem Dampf (5-6) in einem Behälter (1) in einem unteren Bereich von diesem angeordnet ist und dieser Behälter (1) oben mit einem Deckel (3) verschlossen ist, dadurch gekennzeichnet, daß der Behälter (1) eine Wanne mit doppelter Wandung aufweist, innerhalb derer eine Heizflüssigkeit zirkuliert, wobei die Vorrichtung zum Einblasen von Dampf (5-6) eine Rohrschlange (6) mit Durchbohrungen (7) aufweist, die dergestalt angeordnet sind, daß ein Hohlwirbel in der Rühreimasse erzeugt wird.
